# FASCICULE DE BREVET EUROPEEN

(11) **EP 1 089 869 B1**
(45) Date de publication et mention de la délivrance du brevet: **16.04.2003**
(21) Numéro de dépôt: 98921315.2
(22) Date de dépôt: 28.05.1998
(51) Int. Cl.: B31D 5/00, B65B 9/13, B65D 81/05, B29C 65/00

(54) **MACHINE A FABRIQUER DES COUSSINS D'AIR POUR L'EMBALLAGE**
VORRICHTUNG ZUR HERSTELLUNG VON LUFTKISSEN FÜR VERPACKUNG
MACHINE FOR MAKING AIR CUSHIONS FOR PACKAGING

(43) Date de publication de la demande: 11.04.2001
(73) Titulaire: Best-Pack S.A., 1868 Collombey (CH)
(72) Inventeur: MOREILLON, Alain, CH-1971 Grimisuat (CH)
(86) Numéro de dépôt international: CH9800226
(87) Numéro de publication internationale: WO99061232

(56) Documents cités:
- EP-A- 0 836 926
- WO-A-94/07678
- WO-A-96/26137
- FR-A- 1 095 220
- FR-A- 2 603 019
- US-A- 3 738 210
- US-A- 5 660 662
- PATENT ABSTRACTS OF JAPAN vol. 095, no. 009, 31 octobre 1995 & JP 07 165267 A (SHIN NIPPON:KK), 27 juin 1995 cité dans la demande
- PATENT ABSTRACTS OF JAPAN vol. 095, no. 004, 31 mai 1995 & JP 07 016961 A (SHIN NIPPON:KK), 20 janvier 1995 cité dans la demande

## Description

La présente invention a pour objet une machine à fabriquer des coussins d'air pour l'emballage, notamment pour caler des objets délicats et fragiles.

Le brevet japonais n° 7-16961 décrit le principe d'une telle machine. En effet, dans ce document il est décrit un appareil destiné à produire des coussins d'air à partir d'un film tubulaire enroulé sur une bobine. Cet appareil comporte dans l'ordre à partir de la bobine de stocage : des moyens introduits à l'intérieure du film tubulaire s'appuyant sur deux cylindres libres en rotation destinés à écarter les deux parois du tube ; deux cylindres entraînés en rotation destinés à tirer le tube de la bobine et à le pousser vers un dispositif de gonflage soudage. L'appareil est sensé fonctionner de la manière suivante, une fois l'extrémité du tube introduite dans le dispositif de gonflage soudage cette dernière est fermée par soudage, puis le tube est avancé de la longueur d'un coussin, ensuite une aiguille creuse perce une des deux parois et de l'air est introduit dans le tube, qui se gonfle dans la partie située après ledit dispositif, après cela le tube est soudé en aval et en amont du trou fait par l'aiguille, de manière à former un coussin à la partie avale et une fermeture pour le coussin suivant, le tube est alors avancé de la longueur d'un coussin et les opérations se répètent. Cet appareil ne fonctionne pas ou mal, car au moment du perçage les deux parois ne sont pas séparées et l'aiguille perce parfois les deux parois ce qui empêche le gonflage. De plus, comme le tube est poussé dans le dispositif de gonflage soudage il risque de faire des bourrages, c'est-à-dire que le tube peut rester collé à un des dispositifs de soudage.

Dans le brevet japonais n° 7-165267, le titulaire, qui est le même que celui du brevet précédemment cité, a essayé de pallier ces défauts. Pour ce qui concerne le premier, c'est-à-dire le perçage de l'aiguille il l'a résolu par des moyens compliqués et lents. En effet, il a introduit dans le film tubulaire à partir des cylindres écarteurs une tige qui s'étend jusqu'au dispositif de gonflage soudage, ladite tige avance avec le tube et recule légèrement laissant les deux parois écartées assurant le perçage d'une seule paroi. Par contre, en ce qui a trait au second défaut, c'est-à-dire les bourrages rien n'a été fait.

Dans le document EP 836926, il décrit une autre solution pour pallier au premier défaut défini ci-dessus, c'est-à-dire relatif au perçage de l'aiguille. Pour avoir un bon perçage le film tubulaire est tiré dans la machine de manière qu'il soit tendu au moment du perçage et le perçage se fait à travers les deux parois en même temps, puis les deux parois du tube sont séparées par une pièce introduite dans le tube. Le gonflage se faisant par serrage de deux pièces sur la pièce disposée à l'intérieur du tube à travers des ouvertures prévues dans cette dernière. Cette machine est compliquée et demande des réglages délicats difficiles à réaliser.

L'invention a pour buts de fournir une machine à fabriquer des coussins d'air pour l'emballage qui ne présente pas les défauts des machines citées ci-dessus, qui soit simple à fabriquer et qui fonctionne avec un bon rendement.

Ces buts sont atteints avec la machine à fabriquer des coussins d'air pour l'emballage selon l'invention comportant une bobine de film tubulaire, un dispositif présentant des moyens disposés à l'intérieur dudit film tubulaire pour en écarter les parois, des moyens pour entraîner le film tubulaire et un dispositif de gonflage soudage présentant au moins une aiguille creuse pour le gonflage, des moyens de serrage pour empêcher l'air introduit dans le film tubulaire de partir vers ladite bobine c'est-à-dire en amont, lesdits moyens étant placés entre les moyens disposés à l'intérieur dudit film et la bobine, le dispositif de gonflage étant placé après les moyens disposés à l'intérieur dudit film et avant les moyens d'entraînement dudit film de manière à tirer le film tubulaire à travers le dispositif de gonflage soudage, caractérisée en ce que le dispositif de gonflage soudage comprend au moins une aiguille fixée à un premier balancier disposé d'un côté dudit film commandé par un premier vérin, et deux éléments chauffants placés en amont et en aval de l'aiguille fixés sur un second balancier disposé de l'autre côté dudit film commandé par un second vérin.

L'invention sera mieux comprise et ses avantages apparaîtront plus clairement à la lecture de la description de formes d'exécution données uniquement à titre d'exemple, en regard ses dessins sur les quels :
la figure 1 représente une vue schématique d'une machine selon l'invention,
la figure 2 représente une variante de la forme d'exécution représentée à la figure 1,
la figure 3 représente la coupe A-A de la figure 1 montrant le dispositif d'entraînement vu de dessus,
les figures 4 a, b, c représentent schématiquement les différentes phases du fonctionnement de la machine représentée à la figure 1.

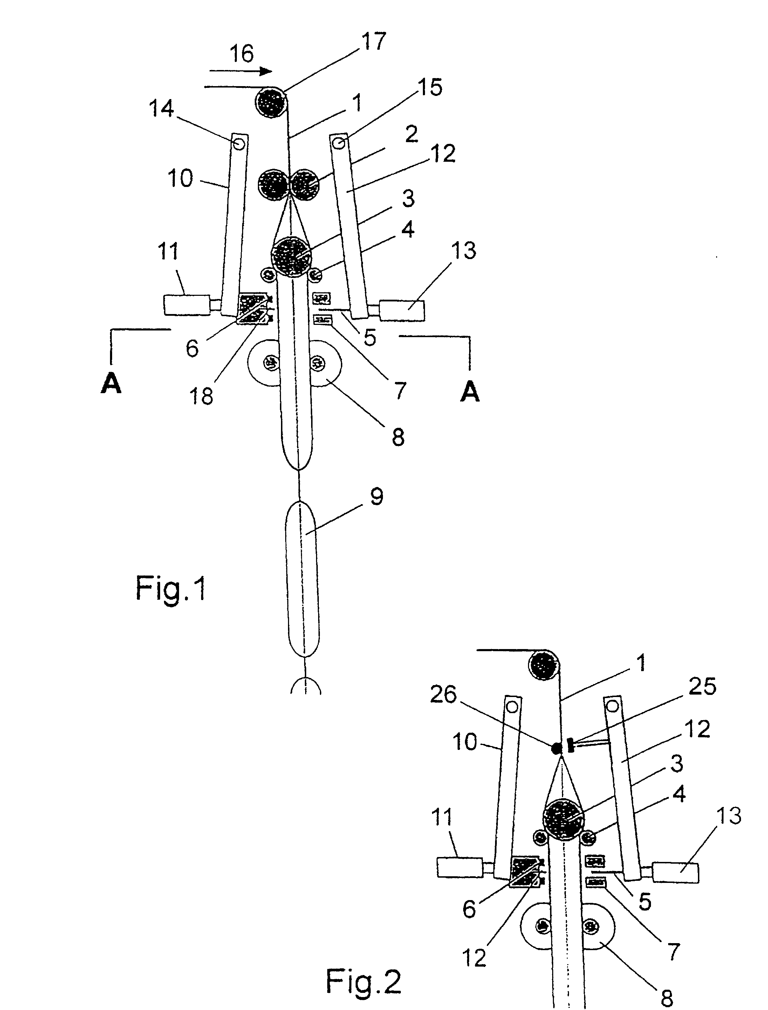

Comme on le voit sur la vue schématique de la figure 1, une réalisation de la machine selon l'invention comporte des moyens 8 pour tirer le film tubulaire 1, qui peut être en toute matière se soudant par soudage thermique, par exemple en plastique. Le film est tiré dans le sens de la flèche 16 d'une bobine, qui n'a pas été représentée. Le film 1 passe d'abord sur un rouleau de renvoi 17 qui le fait se déplacer verticalement sur le dessin, puis il passe entre deux rouleaux 2 en matière souple, par exemple en caoutchouc mousse. Les deux rouleaux 2 sont montés libre en rotation mais en contact l'un avec l'autre, de manière à serrer les deux parois du film 1. Le film tubulaire 1 rencontre ensuite un corps 3 introduit à l'intérieur dudit film tubulaire au moment de la mise en marche de la machine par l'ouverture, qui se trouve au début du film 1. Le corps 3 repose sur deux barres ou tiges 4 disposées à l'extérieur dudit film 1 et écartées d'une distance inférieure au diamètre extérieur du corps 3. Le corps 3 est par exemple un cylindre en matière plastique qui se tient en place uniquement par gravité sur les deux barres 4. Juste après son passage autour du corps 3 le film 1 traverse le dispositif de gonflage soudage.

Le dispositif de gonflage soudage comprend plusieurs aiguilles creuses 5 reliées à des moyens de gonflage (par exemple un compresseur non représenté) et fixées à un premier balancier 12 articulé sur un axe 15, et des moyens de soudage thermique par pression 6 fixés sur un second balancier 10 articulé sur un axe 14. Le mouvement pendulaire du balancier 12 est commandé par un premier vérin 13 et le mouvement pendulaire du balancier 10 est commandé par un second vérin 11. Les aiguilles et les moyens de soudage pourraient être directement fixés à des vérins, mais le fait de disposer aussi bien les moyens de soudage que les aiguilles sur des balanciers représente une simplification de la machine selon l'invention, car les vérins nécessaires aux mouvements des balanciers sont beaucoup plus simples et ne demandent aucun moyens de guidage.

Les moyens de soudage 6 sont constitués par deux barres chauffantes (par exemple par résistance thermique) disposées l'une au-dessus de l'autre de longueur au moins égale à la largeur du film tubulaire 1, et placées d'un côté dudit film en face de barres de butées 7 placées de l'autre côté l'une au-dessus de l'autre. Les aiguilles creuses 5 étant disposées entre les barres de butées 7. Le dispositif de gonflage soudage comprend encore entre les barres chauffantes des pointes ou un couteau à dents 18 perforant ou découpant partiellement le film tubulaire 1 afin d'en faciliter le découpage.

La figure 2 représente une variante de la réalisation représentée à la figure 1, en ce sens que les deux rouleaux 2 sont remplacés par une barre 26 de longueur égale à la largeur du film 1 et un tampon 25 de même longueur fixé sur le balancier 12.

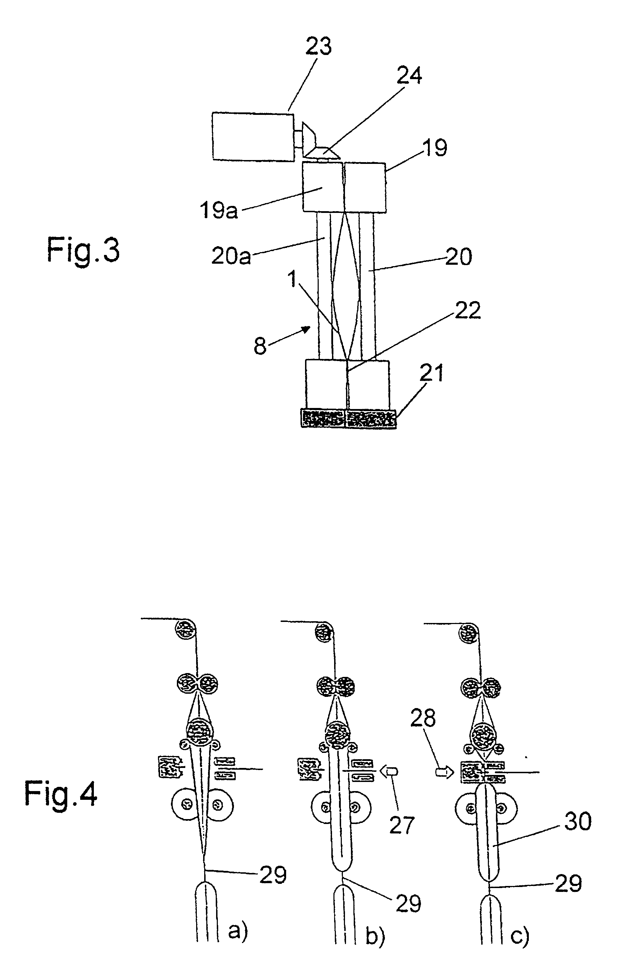

Sur la figure 3 on voit que le dispositif d'entraînement 8 comprend deux cylindres 19, 19a présentant chacune de leurs extrémités des diamètres plus grands que le diamètre de leurs parties centrales 20, 20a. Les parties d'extrémités des cylindres 19, 19a sont revêtues de matière souple et élastique, par exemple du caoutchouc mousse. Les cylindre 19, 19a sont en contacts l'un avec l'autre par leurs extrémités laissant dans leur partie centrale un espace de manière que les deux parois du film tubulaire 1 puissent rester écartées après le gonflage. Les deux cylindres sont entraînés en rotation par un moteur 23 au moyen des engrenages 24 et 21.

Le fonctionnement de la machine sera expliqué en regard des figures 4a, 4b et 4c. Les éléments représentés sont les mêmes que ceux de la figure 1, les signes de références n'ont pas été repris afin de ne pas charger les dessins. Tout d'abord on tire l'extrémité du film tubulaire 1 à travers les rouleaux 2,puis on introduit le corps 3 par l'ouverture de l'extrémité dudit film tubulaire à l'intérieur de ce dernier, et ensuite on fait fonctionner le dispositif de soudage de manière à fermer l'extrémité du film tubulaire 1 par une soudure 29. La machine est prête à fonctionner, comme représenté à la figure 4a. Les aiguilles 5 sont introduites selon la flèche 27 figure 4b dans le film tubulaire par un mouvement du balancier 12 actionné par le vérin 13 perforant une seule paroi, car la zone d'introduction se trouve juste après- le corps 3 et les parois du film tubulaire sont bien séparées. Le gonflage s'effectue alors, l'air étant retenu par la soudure 29 et par les rouleaux 2 ou par le tampon 25 se déplaçant avec le balancier 12 et venant en appui sur la barre 26, cette dernière disposition étant plus avantageuse, notamment eu égard à la force de traction nécessaire pour tirer le film. Une fois le gonflage effectué les aiguilles sont retirées en arrière par un mouvement dans le sens inverse du balancier 12 commandé par le vérin 13.

Le soudage peut alors s'effectuer, les barres de soudage étant déplacées selon la flèche 28 figure 4c par le balancier 10 commandé par le vérin 11de manière à venir en appui sur les barres de butées 7 serrant entre elles et les barres de butées le film tubulaire. Les barres de soudage étant ensuite chauffées de manière à réaliser un scellement des deux parois du film tubulaire réalisant un coussin 30. Puis les barres de soudage sont retirées en arrière par un mouvement inverse du balancier 10 commandé par le vérin 11. Le coussin 30 est ensuite tirer par les cylindres 8 sur ses bords comme indiqué sur la figure 3 d'une longueur égale a la longueur d'un coussin.

Le cycle décrit ci-dessus peut alors recommencer car nous nous trouvons de nouveau dans le cas de la figure 4a.

## Revendications

1. Machine à fabriquer des coussins d'air pour l'emballage à partir d'un film tubulaire (1) disposé sur une bobine comprenant des moyens disposés à l'intérieur (3) dudit film tubulaire pour en écarter les parois, des moyens pour entraîner (8) le film tubulaire et un dispositif de gonflage soudage (5, 6, 7, 12) présentant au moins une aiguille creuse (5) pour le gonflage, des moyens pour serrer (2) ledit film pour empêcher l'air de partir vers ladite bobine c'est-à-dire en amont, lesdits moyens (2) étant placés entre les moyens disposés (3) à l'intérieur dudit film et la bobine, en ce que le dispositif de gonflage soudage (5, 6, 7, 12) est placé après les moyens disposés (3) à l'intérieur dudit film et avant les moyens d'entraînement (8) dudit film de manière à tirer le film tubulaire a travers le dispositif de gonflage soudage, **caractérisé en ce que** le dispositif de gonflage soudage comprend au moins une aiguille (5) fixée à un premier balancier (12) disposé d'un côté dudit film commandé par un premier vérin (13), et deux éléments chauffants (6) placés en amont et en aval de l'aiguille fixés sur un second balancier (10) disposé de l'autre côté dudit film commandé par un second vérin (11).

2. Machine selon la revendication 1, **caractérisée en ce que** les moyens (2) pour serrer ledit film sont formés par deux cylindre en matière souple, par exemple en caoutchouc mousse, en appui l'un contre l'autre entre lesquels passe le film.

3. Machine selon la revendication 1, caractérisée en ce les moyens pour serrer ledit film sont formés d'une barre (25) sur laquelle le film passe et d'un tampon (26) en matière souple, par exemple du caoutchouc mousse, pressé sur le film contre la barre.

4. Machine selon la revendication 3, **caractérisée en ce que** le tampon (25) est fixé sur le premier balancier (12) de manière à être maintenu écarté dudit film pendant que ce dernier se déplace et serré sur ladite barre (26) pendant le gonflage.

5. Machine selon l'une des revendications 1 à 4, caractérisée en ce les éléments chauffants (6) sont montés sur ressort sur le second balancier (10).

6. Machine selon l'une des revendications 1 à 5 , **caractérisée en ce que** le dispositif de gonflage et de soudage comprend entre les barres chauffantes des pointes ou un couteau à dents (18) perforant ou découpant partiellement le film tubulaire (1) afin d'en faciliter le découpage entre les coussins.

## Claims

1. Machine for making air cushions for packaging from a tubular film (1) arranged on a reel comprising spacing means (3) provided inside said tubular film to separate the walls thereof, driving means (8) for pulling the tubular film and an inflating and welding device (5,6,7,12) presenting at least one hollow needle (5) for the inflation, pinching means (2) for pinching said film to prevent air from moving towards said reel, that is to say, upstream, said pinching means (2) being located between the spacing means (3) provided within the film and the reel and in that that the inflating and welding device (5,6,7,12) is located after the spacing means (3) and before the means of driving said film (8) so as to pull the tubular film through the inflating and welding device, **characterised in that** the inflating and welding comprises at least one needle (5) attached to a first beam (12) arranged on one side of said film and operated by a first actuator (13), and two heating elements (6) placed upstream and downstream of said needle attached to a second beam (10) arranged on the other side of said film and operated by a second actuator (11).

2. Machine in accordance with Claim 1, **characterized in that** that the pinching means (2) are formed by two cylinders of flexible material, for exemple, of foam rubber, pressing on one another and between which the film passes.

3. Machine in accordance with Claim 1, **characterized in that** the pinching means are formed of a rod (25) on which the film passes and a pad (26) of flexible material, for example, of foam rubber, pressed on the film against said rod.

4. Machine in accordance with Claim 3, **characterized in that** the pad (25) is attached to the first beam (12) so as to be kept away from said film while the latter is being displaced and tight against said bar (26) during the inflation.

5. Machine in accordance with one of the Claims 1 to 4, **characterized in that** said heating elements (6) are spring mounted on the second beam (10).

6. Machine in accordance with one of the Claims 1 to 5, **characterized in that** the inflating and welding means comprises points or a toothed cutter (18) perforating or partially cutting the tubular film (1) to facilitate separation between the cushions.

## Patentansprüche

1. Maschine zur Herstellung von Luftkissen für Verpackungen ausgehend von einer auf einer Spule befindlichen Schlauchfolie (1). Sie umfasst Abstandshalter (3) innerhalb der Schlauchfolie, um deren Wände auseinander zu halten, Antriebsmittel (8) zum Einziehen der Schlauchfolie und eine Füll- und Schweissvorrichtung (5, 6, 7, 12) mit mindestens einer Hohlnadel (5) für das Befüllen, Klemmmittel (2) um die Folie anzudrücken, damit die Luft nicht zur Spule hin, das heisst nach hinten entweichen kann. Die Klemmmittel (2) befinden sich zwischen den Abstandshaltern (3) und der Spule, und die Füll- und Schweissvorrichtung (5, 6, 7, 12) befindet sich hinter den Abstandshaltern (3) und vor den Antriebsmitteln (8) der Schlauchfolie, so dass die Schlauchfolie durch die Füll- und Schweissvorrichtung gezogen wird, **dadurch gekennzeichnet, dass** die Füll- und Schweissvorrichtung mindestens eine Hohlnadel (5) umfasst, die an einem ersten Schwengel (12) befestigt ist, der sich auf einer Seite der Folie befindet und von einem ersten Zylinder (13) gesteuert wird und zwei Heizelemente (6), die vor und hinter der Nadel an einem zweiten Schwengel (10) befestigt sind, der sich auf der anderen Seite der Folie befindet und von einem zweiten Zylinder (11) gesteuert wird.

2. Maschine nach Anspruch 1, **dadurch gekennzeichnet, dass** die Klemmmittel (2) aus zwei Walzen aus flexiblem Material, beispielsweise Moosgummi bestehen, die aufeinanderliegen und zwischen denen die Folie durchgeführt wird.

3. Maschine nach Anspruch 1, **dadurch gekennzeichnet, dass** die Klemmmittel aus einer Stange (25) bestehen, auf der die Folie geführt wird, sowie aus einem Puffer (26) aus flexiblem Material, beispielsweise Moosgummi, der auf die Folie gegen die Stange gepresst wird.

4. Maschine nach Anspruch 3, **dadurch gekennzeichnet, dass** der Puffer (25) so am ersten Schwengel (12) befestigt ist, dass er von der Folie entfernt gehalten wird, während die Folie beim Füllen weiterläuft und auf die Stange (26) gedrückt wird.

5. Maschine nach einem der Ansprüche 1 bis 4, **dadurch gekennzeichnet, dass** die Heizelemente (6) am zweiten Schwengel (10) auf eine Feder montiert sind.

6. Maschine nach einem der Ansprüche 1 bis 5, **dadurch gekennzeichnet, dass** die Füll- und Schweissvorrichtung zwischen den Heizstäben Spitzen oder ein gezahntes Messer (1) umfasst, das die Schlauchfolie (1) teilweise perforiert oder abschneidet, um ihren Zuschnitt zwischen den Kissen zu erleichtern.
